# EUROPEAN PATENT APPLICATION

(11) **EP 3 323 651 A1**
(43) Date of publication of application: **23.05.2018**
(21) Application number: 17194447.3
(22) Date of filing: 02.10.2017
(51) Int. Cl.: B60J 11/04

(54) **CARAVAN COVER SHEET**

(30) Priority: 14.11.2016 DE 202016006999 U
(71) Applicant: GL Plastic International Ltd., Hong Kong (HK)
(72) Inventor: NELSON, Hui Wing Kee, Hong Kong (HK)
(74) Representative: Weickmann & Weickmann PartmbB

(57) **Abstract**

Caravan cover sheet (10) for covering a caravan comprising one or more connection portions (18) for connecting edges (16) of the cover sheet (10) to one another and disconnecting the edges (16) of the cover sheet (10) from one another, wherein the cover sheet (10) further comprises optical marks (20) provided associated to the one or more connection portions (18) such as to extend parallel along the edges (16).

## Description

The present invention relates to a caravan cover sheet for covering a caravan comprising one or more connection portions for connecting and disconnecting edges of the cover sheet to one another.

Cover sheets for covering vehicles, in particular caravans, are known for a long time. With these cover sheets, caravans can be protected against weather conditions as rain and snow as well as against dirt or the like, since most of the time, especially during the cold seasons, caravans are not moved. When moving the caravan, for example for holidays, journeys or trips, the flexible caravan cover sheet can easily be folded and stowed at a suitable place.

A disadvantage of these cover sheets is that, for example when starting a journey or holiday trip quite early or returning from the trip during night time, when now or low light is available, it is often quite difficult to find the location of the edges of the cover sheets to be disconnected from one another when uncovering the caravan or connected to one another when covering the caravan. Also unpacking a folded cover sheet initially in the correct manner and orientation with respect to the caravan can be difficult without any auxiliary means. Considering the usually great height of a caravan, it can also be dangerous for a person to cover or uncover a caravan with a cover sheet in the dark when the location of the connection portions of the cover sheet cannot be identified quickly and easily.

Under the above-mentioned circumstances it was an object of the present invention to provide a caravan cover sheet which ensures that people can easily identify the caravan cover sheet and the location of the connection portions of the cover sheet, in particular in the dark or during night time and thereby also preventing any damage and/or hurt of a person handling the caravan cover sheet.

This object is achieved by a caravan cover sheet for covering a caravan comprising one or more connection portions for connecting edges of the cover sheet to one another and disconnecting the edges of the cover sheet from one another, wherein the cover sheet further comprises optical marks provided associated to the one or more connection portions such as to extend parallel along the edges.

Providing optical marks simplifies a quick and easy identification of the connection portions of the caravan cover sheets by a person handling it. For example, when the cover sheet is folded, it may take a longer time to unfold the different sheet surfaces in the correct manner and orientation with respect to the caravan and optical marks at the edges can help to initially unpack the folded cover sheet in the correct orientation with respect to the caravan. Additionally, there could also be provided orientation marks like "left", "right", "front", "back", "top", for example, to even more ease and speed up the process of covering and uncovering a caravan, respectively.

In a preferred embodiment of the present invention, the optical marks may be reflective stripes which offer a good visibility in the dark and make the location of the connection portions visible for a user during night time or in the dark.

Preferably, the reflective stripes may be reflective tapes attached to the cover sheet such as to extend parallel along the edges, such that the entire length of the edges and the connection portions of the cover sheet, respectively, can be accurately identified and seen even during night time or in the dark. Alternatively, the reflective tapes could also be attached to the cover sheet in an interrupted manner or the like.

Furthermore, the cover sheet may be substantially cuboid-shaped when the one or more connection portions are connected. Caravans are mostly substantially cuboid-shaped and therefore properly fit into a cuboid-shaped cover sheet. Additionally, a cover sheet having the shape of a cuboid can be produced easily and cost-effectively. As an alternative, any other form similar to the shape of a caravan is conceivable.

In another preferred embodiment of the present invention, the cover sheet may comprise at least two connection portions provided at lateral edges of the cover sheet. Connection portions provided at lateral edges of the cover sheet ease a connection or disconnection of the cover sheet edges when covering or uncovering a caravan, since the lateral edges are easy to reach by a person. It is also possible that at each lateral edge of the cover sheet a connection portion is provided, but it would not be advantageously to provide a connection portion at an upper edge of the cover sheet, since an upper edge of the cover sheet is difficult to reach when the cover sheet covers a caravan due to the generally great height of caravans.

Additionally, the one or more connection portions may be formed by slide fasteners. Slide fasteners, in the following also referred to as zippers, are a suitable means for connecting and disconnecting flexible elements like sheets enabling an easy opening and closing of the cover sheet, respectively, when covering and uncovering a caravan. Additionally, zippers are capable of connecting sheets to another leaving only a very small space between the individual zipper elements and thus, are suitable to protect the inside of the cover sheet from dirt or weather conditions like rain, snow and wind. Therefore, the slide fasteners may be rain and/or wind proof slide fasteners.

Preferably, the cover sheet may be made of a rain proof material for the same reasons as set out above. A rain proof material also protects the metal parts of a caravan against oxidation.

In a further preferred embodiment of the present invention, the cover sheet may comprise one or more vent openings provided with a mesh, the vent openings preferably comprising a roof element attached to the cover sheet above an upper portion of the one or more vent openings. Such vent openings ensure air ventilation in the interior of the caravan cover sheet and thereby prevent humidity. A mesh provided to close the vent opening is suitable to prevent insects or the like to pass into the interior of the cover sheet still allowing air ventilation in the interior of the caravan cover sheet.

A preferred embodiment of the present invention will now be described by way of example with reference to the accompanying drawings, in which
- figure 1: is a perspective view of a caravan cover sheet according to the preferred embodiment of the present invention, wherein connection portions of the cover sheet are connected to one another;
- figure 2: is a plan view of the cover sheet according to the preferred embodiment of the present invention, wherein the connection portions of the cover sheet are disconnected from one another;
- figure 3: is an enlarged view of one connection portion of the cover sheet connecting two edges of the cover sheet; and
- figure 4: is an enlarged view of a portion of the cover sheet, in which a vent opening is provided.

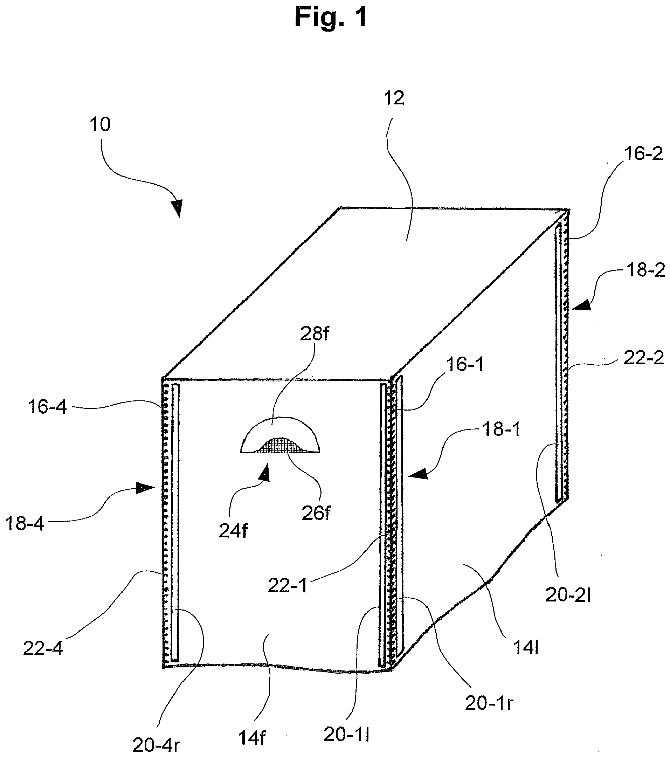

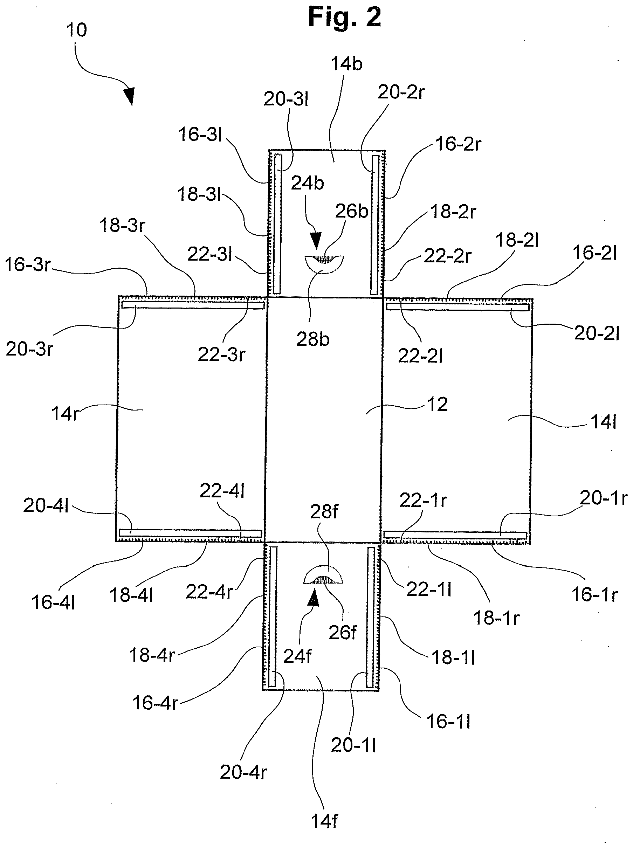

Figure 1 shows a caravan cover sheet 10 in a state in which connection portions 18 of the cover sheet are connected to one another such that a caravan (not shown) can be accommodated in the interior of the caravan cover sheet 10 and figure 2 shows the caravan cover sheet 10 in a state in which the connection portions 18 of the cover sheet are disconnected from one another and the cover sheet 10 is put flat on the ground.

The caravan cover sheet 10, for example made of a water and wind proof synthetic tarpaulin material, for covering a caravan comprises a top surface 12, side surfaces 14 and lateral edges 16. According to the exemplifying embodiment of the present invention, the side surfaces 14 may be constituted by a front surface 14f, a back surface 14b and lateral surfaces 141, 14r and the lateral edges 16 may be constituted by lateral edges 16-1, 16-2, 16-3, 16-4 comprising left and right lateral edges 16-11, 16-1r, 16-21, 16-2r, 16-3l, 16-3r, 16-4l, 16-4r, respectively, formed at lateral portions of the side surfaces 14. The caravan cover sheet 10 further comprises one or more connection portions 18, in the preferred embodiment four connection portions 18-1, 18-2, 18-3, 18-4 provided at the lateral edges 16-1, 16-2, 16-3, 16-4 comprising left and right connection portions 18-11, 18-1r, 18-21, 18-2r, 18-31, 18-3r, 18-41, 18-4r, respectively.

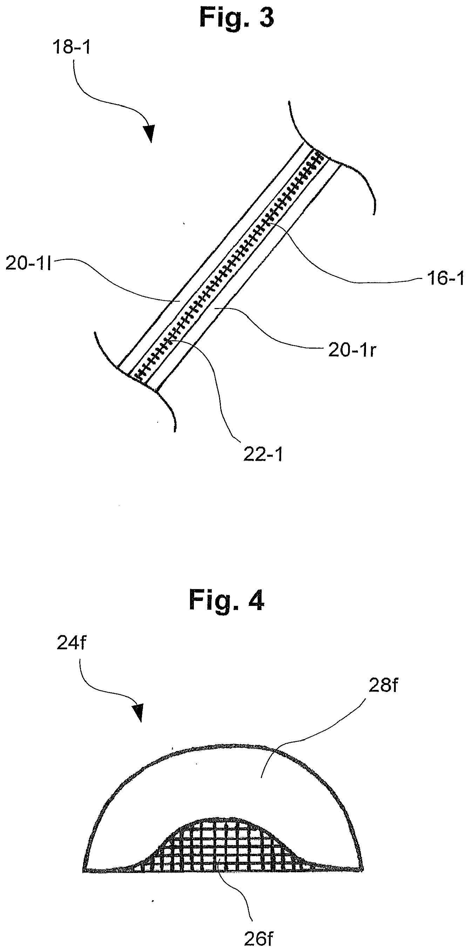

As shown for example in figure 3 which is an enlarged view of the connection portion 18-1, additionally, optical marks 20 are provided, wherein, according to the preferred embodiment, the optical marks 20 may be constituted by optical marks 20-1, 20-2, 20-3, 20-4 also comprising left and right optical marks 20-1l, 20-1r, 20-2l, 20-2r, 20-3l, 20-3r, 20-4l, 20-4r, respectively, associated to the connection portions 18-1l, 18-1r, 18-2l, 18-2r, 18-3l, 18-3r, 18-41, 18-4r. In the preferred embodiment the one or more connection portions 18 may be formed by slide fasteners 22, in the following also referred to as zippers 22, in particular by four zippers 22-1, 22-2, 22-3, 22-4 comprising left and right zipper elements 22-1l, 22-1r, 22-2l, 22-2r, 22-3l, 22-3r, 22-4l, 22-4r, respectively.

Figure 4 shows a portion of the cover sheet 10, in which a vent opening 24f, 24b is provided. According to the exemplifying embodiment of the present invention, the caravan cover sheet 10 may also comprise the vent openings 24f, 24b provided with a mesh 26f, 26b and a roof element 28f, 28b. The vent openings 24f, 24b may be formed at the front surface 14f and the back surface 14b, respectively, but could also be formed at any other surface of the cover sheet 10, for example at the side surfaces 141, 14r or at the top surface 12. The mesh 26f, 26b may have a mesh size of 0.5 to 2 mm, preferably 1 to 1.5 mm, to prevent insects or the like to pass into the interior of the cover sheet 10 and allow air ventilation in the interior of the caravan cover sheet 10 and may be fabricated by polyester, fiberglass, steel, aluminum or the like.

As shown in figure 4, the roof element 28f, 28b may be attached to the cover sheet 10 above an upper portion of the vent openings 28f, 28b, preferably not overlaying the entire dimension of the vent openings 24f, 24b, and may have a substantially semicircular form. As an alternative the roof element 28f, 28b may have any other shape suitable to prevent water, in particular rain water, to reach the interior of the cover sheet 10.

## Claims

1. Caravan cover sheet (10) for covering a caravan comprising one or more connection portions (18) for connecting edges (16) of the cover sheet (10) to one another and disconnecting the edges (16) of the cover sheet (10) from one another,
**characterized in that** the cover sheet (10) further comprises optical marks (20) provided associated to the one or more connection portions (18) such as to extend parallel along the edges (16).

2. Caravan cover sheet (10) according to claim 1, **characterized in that** the optical marks (20) are reflective stripes (20).

3. Caravan cover sheet (10) according to claim 2, **characterized in that** the reflective stripes (20) are reflective tapes (20) attached to the cover sheet (10) such as to extend parallel along the edges (16).

4. Caravan cover sheet (10) according to any of the preceding claims, **characterized in that** the cover sheet (10) is substantially cuboid-shaped when the one or more connection portions (18) are connected.

5. Caravan cover sheet (10) according to any of the preceding claims, **characterized in that** the cover sheet (10) comprises at least two connection portions (18) provided at lateral edges (16) of the cover sheet (10).

6. Caravan cover sheet (10) according to any of the preceding claims, **characterized in that** the one or more connection portions (18) are formed by slide fasteners (22).

7. Caravan cover sheet (10) according to any of the preceding claims, **characterized in that** the cover sheet (10) is made of a rain proof material.

8. Caravan cover sheet according (10) to any of the preceding claims, **characterized in that** the cover sheet (10) comprises one or more vent openings (24) provided with a mesh (26), the vent openings (24) preferably comprising a roof element (28) attached to the cover sheet (10) above an upper portion of the one or more vent openings (24).
